(19) Europäisches Patentamt / European Patent Office / Office européen des brevets

(11) **EP 2 166 796 A1**

(12) **EUROPEAN PATENT APPLICATION**

(43) Date of publication:
**24.03.2010 Bulletin 2010/12**

(51) Int Cl.:
*H04W 36/08* (2009.01)

(21) Application number: **08105417.3**

(22) Date of filing: **23.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks OY**
**02610 Espoo (FI)**

(72) Inventors:
• **Döttling, Martin**
  **85579, Neubiberg (DE)**
• **Waldhauser, Richard**
  **81249, München (DE)**

(74) Representative: **Bruglachner, Thomas E.**
**Nokia Siemens Networks Oy**
**COO RTP IPR / Patent Administration**
**80240 Munich (DE)**

(54) **Decentralized and coordinated adjustment of handover parameter values based on a network operator policy**

(57) It is described a method for adjusting a parameter value for controlling a handover of a user equipment between a first (110) and a second base station (120) of a telecommunication network (100). The method comprises (a) providing policy information about a desired nominal operational condition of the network (100) by an operator (105) to the first (110) and the second base station (120), (b) determining a first and second optimized parameter value for carrying out the handover based on the provided policy information, (c) transmitting an information message between the first (110) and the second base station (120), wherein the information message is indicative for an intended change of the first and/or the second optimized parameter value, and (d) adjusting the first optimized parameter value by means of the first base station (110) and/or the second optimized parameter value by means of the second base station (120) in a coordinated manner based on the transmitted information message. It is further described a base station and a computer program for carrying out and controlling, respectively, the described method.

## FIG 1

**Description**

Field of invention

The present invention relates to the field of operating mobile telecommunication networks such as for instance 3GPP Long-Term Evolution networks and Long-Term-Evolution Advanced (LTE-A) networks. In particular, the present invention relates to a method for adjusting at least one parameter value for controlling a handover of a user equipment between a first cell and a second cell of a telecommunication network, wherein surrounding conditions such as a handover optimization and a load balancing between different base stations of the telecommunication network can be taken into account. Further, the present invention relates to a base station, which in conjunction with other appropriate network elements such as a further base station is adapted to accomplish the described handover parameter value adjustment method. Furthermore, the present invention relates to a computer program for controlling the described handover parameter value adjustment method.

Art Background

Handover of a user equipment (UE) between a serving cell s and a neighbouring cell n is based on a ranking criterion, which itself depends on the cells' signal strength and a hysteresis value $Q_{hyst,s}$ and a cell-pair specific offset $Q_{offset,s,n}$. Changes of the hysteresis value and the offset value have an impact on the quality during handovers and on the success rate of handovers, on the occurrence of unwanted ping-pong handovers and on the data load distribution between different cells.

In the 3GPP technical specification TS 36.304 the cell-ranking criterion $R_s$ for the serving cell and the cell-ranking criterion $R_n$ for the neighbouring cells are defined by the following equations:

$$R_s = Q_{meas,s} + Qhyst_s \qquad (1)$$

$$R_n = Q_{meas,n} - Qoffset \qquad (2)$$

Thereby, the values $Q_{meas,s}$ and $Q_{meas,n}$ are obtained by averaged Reference Signal Received Power (RSRP) measurements. Qoffset is a function of $Qoffset_{s,n}$ and $Qoffset_{frequency}$. The value $Qoffset_{s,n}$ described the offset value between the source base station and the neighbouring i.e. the target base station. Positive values for $Qhyst_s$ and/or Qoffset prevent or at least demote a handover (HO). Negative values for $Qhyst_s$ and/or Qoffset promote the execution of a HO procedure from the presently serving cell to the respective neighboring cell representing the future serving cell.

A re-selection of the cell is done if a neighbouring cell n is ranked higher than the serving cell s during a time interval $Treselection_s$. $Treselection_s$ and $Qhyst_s$ can take different values according to the velocity of the UE, i.e. scaled by a specific factor if the UE is in "high mobility state". Minimum time for camping on a cell is typically 1 second.

For active UEs, the handover decision is done by the serving base station and proprietary algorithms being implemented in the serving base station. These algorithms are often specific for the vendor of the base station.

A handover of a UE from a presently serving source base station to a future serving target base station comprises the following actions and phases:

a) Initialization Phase

a1) The UE executes RSRP measurements on both source base station and the target base station.
a2) The UE processes the measurements and sends measurement reports to the source base station either upon configured event triggers or periodically.

b) Preparation Phase

b1) The source base station decides when to command a UE to do a handover.
b2) The source base station informs the target base station about the handover request. At this phase the target base station may still decline the handover.

c) Execution Phase

c1) The source base station sends an HO command to the UE and starts forwarding packets to the target base station.

c2) The UE receives the HO command and prepares to do the handover according to command contents. The handover is always scheduled to occur at one of certain time instants.

c3) The source base station stops scheduling the UE.

c4) The UE breaks the connection to the source base station and starts cell synchronization to the target base station.

If either the handover command is not received or the actual handover fails (for whatever reason), user starts cell reselection procedure when the connection breaks

The 3GPP technical specification TS 36.331 defines the related measurement configuration for UEs. There exists also a parameter $Qoffset_{frequency}$ (named as offsetFreq in TS 36.331) and a "CellIndividualOffset" as measurement objects for an Evolved Universal Terrestrial Radio Access E-UTRAN Network. There exist also a "time-to-trigger" parameter and a "hysteresis" parameter which both provide an enter/leave criterion for the measurement trigger condition.

In a LTE network related signaling messages transmitted via the terrestrial X2 interface between different base stations, which are called evolved NodeBs (eNodeBs, eNBs), are given in the 3GPP technical specification TS 36.423. Although the neighbouring base station (eNodeB, eNB) is able to reject a HO request, the source eNB cannot impact this behavior or understand it accurately enough to adapt own decisions. Both HO request failure messages and HO preparation failure messages allow including an information element to indicate the cause of the HO failure.

HO parameter optimization is considered most important for active UEs in order to provide for a smooth HO both for the UE and for the whole telecommunication network. However, the HO decision might be based on several and different criteria in each base station in particular if different base stations have been provided by different vendors.

There may be a need for providing a generic way to perform HO parameter optimization in a reliable and efficient manner. In particular, there may be a need for enabling a failsafe optimization of these HO parameters in a multi-vendor environment considering the operator-specific and potentially conflicting optimization goals of different Self Optimization Network (SON) use cases (a) handover optimization, (b) avoiding ping-pong handover and (c) load balancing.

Summary of the Invention

This need may be met by the subject matter according to the independent claims. Advantageous embodiments of the present invention are described by the dependent claims.

According to a first aspect of the invention there is provided a method for adjusting at least one parameter value for controlling a handover of a user equipment between a first base station serving a first cell of a telecommunication network and a second base station serving a second cell of the telecommunication network. The provided method comprises (a) providing policy information about a desired nominal operational condition of the telecommunication network by an operator of the telecommunication network to the first base station and to the second base station, (b) determining a first optimized parameter value for carrying out the handover based on the provided policy information by means of a first policy interpretation function being associated with the first base station, (c) determining a second optimized parameter value for carrying out the handover based on the provided policy information by means of a second policy interpretation function being associated with the second base station, (d) transmitting an information message between the first base station and the second base station, wherein the information message is indicative for an intended change of the first optimized parameter value and/or for an intended change of the second optimized parameter value, and (e) adjusting the first optimized parameter value by means of the first base station and/or the second optimized parameter value by means of the second base station in a coordinated manner based on the transmitted information message.

This first aspect of the invention is based on the idea that policy goals for the telecommunication network, which are provided by the network operator and which reflect the mentioned desired nominal operational condition of the telecommunication network, can be realized at least partially by means of a decentralized procedure, wherein the first base station and/or the second base station adapt the respective optimized parameter value for carrying out the handover (HO) in a coordinated manner with respect to at least an intended change of the optimized parameter value of the other base station. Thereby, the policy goals given by the operator may define an allowable range of values for the respective optimized parameter for carrying out the HO. In the following this optimized parameter is also called optimized handover parameter.

In the described HO parameter adjustment method a distributed calculation respectively a distributed adaption of the optimized parameter values setting is carried out by the first and the second base station while considering the operator policy goal. The parameter adjustment can be done by the base station in a proprietary fashion in order to allow differentiation of vendors and enable future updates without standardization impact. However, in order to allow the coordinated adjustment, information about the neighbor cells' settings is required. This information is provided by the described information message between the first and the second base station.

Descriptive speaking, after the policy information has been provided or distributed to the first and to the second base station, the base stations, which might experience HO or load problems, first determine the optimized HO parameters that would solve the problem from its own perspective but considering the constraints set by the policy information, which is interpreted by the policy interpretation function of the respective base station. Up to this point the method is a hierarchical procedure, wherein the base stations individually try to fulfill the constraints provided by the operators. In the sequel the base stations start its coordinated and decentralized adaptation of the optimized HO parameter values by learning to adapt their HO parameter value settings based on information which they have received from the other respectively the neighbouring base station.

The described method may be applicable for both Frequency Division Duplex and Time Division Duplex technologies and can be carried out within all kind of cellular telecommunication networks such as LTE networks and other kinds of mobile networks. Therefore, the use of the described principles in existing technologies other than LTE-technology is not precluded, but the parameters and procedures may have to be adapted to the existing technology, interfaces and architecture.

The described approach (a) may allow for a decentralized solution suitable for HO parameter optimization in multi-vendor environments, (b) may avoid a centralized Self Optimization Network (SON) function for HO parameter optimization and (c) may provide a joint framework for all use cases or SON goals that use adaptation of handover parameters based on operator policy or operator priority of goals.

It is mentioned that the operator might also be able to prioritize different goals respectively different desired nominal operational condition of the telecommunication network for different SON use cases. The prioritization of the goals can be distributed to the first and the second base station for instance via an Operation & Maintenance Interface. Within the respective base station, the prioritization can be interpreted by the described respective policy interpretation function. This may mean (a) that procedures for adapting a certain goal, which procedures are related to higher priority goals, might overrule lower priority-based procedures. In this context overruling means that the lower priority-based procedure will be terminated before it has caused a change of a parameter value. This may mean (b) that request for a change of a parameter value might only be refused due to higher priority reasons by another peer base station.

It is further mentioned that the first and/or the second optimized parameter value can take either an absolute value, a differential change of the respective parameter value, or a pure indication about an "increase" or a "decrease" of the respective parameter value.

According to an embodiment of the invention the desired nominal operational condition is (a) a predefined load balancing between the first cell and the second cell, (b) a predefined maximum rate for the occurrence of ping-pong handovers, and/or (c) a predefined minimum quality for the handover.

An equal load balancing may be given if the data load within the first cell is at least approximately the same as the data load within the second cell. For the data load control data and/or user data, which are transmitted in particular via radio links in a wireless manner, are relevant. Also unequal load distribution between the first and the second cell might be used as a nominal operation.

A ping-pong handover of a UE between for instance between the first cell and the second cell may occur, if the absolute value of the above mentioned values $Qhyst_s$ and/or Qoffset is too small or even zero. If this is the case, then a UE, which is located approximately in the middle between the first base station serving the first cell and the second base station serving the second cell may be handed over between the two base stations just because of a minor fluctuation of the respective radio link quality between the UE and the first and/or the second base station. The ping-pong HO rate may be given by a value $R_{PPHO}$.

The quality of the handover, which will also be denominated briefly handover quality, can be for instance affected by promoting or demoting the handover by the above mentioned values $Qhyst_s$ and/or Qoffset. If at least one of these values is too large, then a HO can be demoted so strong that the quality of the radio data connection between the user equipment (UE) and the base station, which is serving the UE before the belated handover, is below a predefined minimum quality. Correspondingly, if at least one of these values is too small (negative sign), then a HO can be promoted so strong that the quality of the radio data connection between the user equipment (UE) and the base station, which is serving the UE after a premature the handover, is below a predefined minimum quality.

In this respect it is pointed out that the operator goals for having a high handover quality, for avoiding ping-pong handovers, and for load balancing are typically in competition which each other.

The minimum quality of the handover may be defined by an allowable maximal degradation for a signal to interference and noise ratio during the handover. The maximal signal to interference and noise ratio (SINR) degradation during the handover may be given by the following formula:

$$\Delta SINR_{HO} = (Qoffset_{s,n} + Qhyst_{s}) \qquad (3)$$

According to a further embodiment of the invention (a) the policy information is provided by means of at least one target value, (b) the first optimized parameter value is determined by the first policy interpretation function based on the at least one target value and (c) the second optimized parameter value is determined by the second policy interpretation function based on the at least one target value. This may mean that different target values for different goals are distributed and interpreted by the policy interpretation function of the respective base station.

The described target values may allow the operator to define limits for a trade-off between radio link quality and HO rate. Furthermore, different sets of target values can be given for different UE velocity classes or states.

Further examples for an appropriate target value include (a) data load thresholds causing that a HO should or should not be allowed due to load balancing reasons and (b) a threshold for allowed HO failures, which might be caused by a radio link failure during a HO.

According to a further embodiment of the invention the information message between the first base station and the second base station is transmitted via an X2 interface.

In particular if the X2 interface is a terrestrial respectively a wired interface, detailed information about the intended behavior of the first and/or of the second base station can be exchanged between the first and the second base station without putting any additional radio data load to the first and the second cell.

Generally speaking, in order to allow for a better multitarget optimization and a faster convergence of the described HO parameter value adjustment respectively HO parameter value optimization, detailed signaling and procedures over the X2 interface can be used. Thereby, the two base stations can agree on changes for the first and/or for the second optimized parameter value for carrying out HOs. Further, the two base stations can also agree on a change of cell reselection parameters between two cells, i.e. to handover UEs earlier or later.

According to a further embodiment of the invention the information message comprises a generic request for the intended change of the first optimized parameter value and/or for the intended change of the second optimized parameter value.

The generic request could comprise for example the information that one of the first and the second base station intends to accomplish a forthcoming HO earlier (i.e. the HO should be promoted) or to accomplish the forthcoming HO later (i.e. the HO should be demoted).

At this point it is mentioned that such a pure indication whether the first and/or the second optimized parameter is supposed to be increased or decreased can be exchanged between the base stations without causing a large signaling overload. In particular, due to the minor information content of such a simple indication it might be possible to incorporate or to piggyback this indication into an already existing control message, which is anyway transmitted between the first and the second base station.

According to a further embodiment of the invention the information message comprises (a) a first generic parameter being associated with the first optimized parameter value and/or (b) a second generic parameter being associated with the second optimized parameter.

The first and/or the second generic parameter will have to be interpreted by an algorithm being implemented in the respective base station. For instance the algorithm may be implemented in the above described policy interpretation function of the respective base station.

The first and/or the second generic parameter may be for instance a generic signal level hysteresis $\Delta SINR$ or a cell range, which can be expressed in particular by a maximum timing advance (TA) level. For instance $\Delta SINR$ may specify a change in the signal level where a HO should occur. A change in TA ($\Delta TA$) may have the effect that the cell range, where a HO shall occur, changes.

It has to be mentioned that this/these generic parameter/parameters can be used both for active UEs and for idle UEs. This makes an accomplishment of the described handover parameter value adjustment method simpler because active and idle UEs can be treated in the same way.

According to a further embodiment of the invention the information message comprises (a) a first specific parameter being associated with the first optimized parameter value and/or (b) a second specific parameter being associated with the second optimized parameter. This may provide the advantage that the informed base station will not have to carry out a comparatively costly interpretation procedure in order to figure out what changes in the HO parameter setting the informing base station concretely proposes or requests.

In this respect the informed base station may be the second base station being informed by the first base station and/or the first base station being informed by the second base station.

The first and/or the second specific parameter may be for instance the above mentioned parameters $Qhyst_{s}$ and $Qoffset_{s,n}$. Further candidates for the specific parameters that could be exchanged by means of the described transmitted information message are the parameters "Thyst", "Mobility State" and Qoffset$_{frequency}$. In case of for an UE being in the idle state the value for the specific parameters "Thyst" equals to the value of the above mentioned time interval "Treselection". In case of an UE being in the connected state the value for the specific parameter "Thyst" equals to the value of the above mentioned time interval "time-to-trigger". The value for the "Mobility State" may be normal, medium or high depending on the expected velocity of the UE. It is mentioned that the usage of all these values is defined in the above mentioned technical specifications.

According to a further embodiment of the invention the information message is assigned to a negotiation process, which comprises at least one of the following messages: request for a parameter change, grant of a parameter change, denial of a parameter change, notification of a parameter change. All these messages might also be included in the described information message.

The described negotiation process may provide for a high reliability of the negotiation process for changing the first and/or the second optimized parameter. In particular, the negotiation process might contribute to achieve as well as possible the desired nominal operational condition for the operator's telecommunication network. As has already been mentioned above, this desired nominal operational condition may be for instance a load balancing and/or a HO optimization. The avoidance of ping-pong HO and excessive quality degradation during HO may represent an adjustable constraint on the parameter settings.

According to a further embodiment of the invention the method further comprises transmitting a proactive message from the first base station to the second base station, wherein the proactive message comprises information about (a) whether the first base station is able to accept an additional load and/or (b) which values for the adjusted optimized parameter value would be accepted by the first base station.

In other words, the second base station receives some a priori information about a parameter change from the first base station, which parameter values are acceptable by the first base station. Of course, a corresponding proactive message could also be transmitted from the second base station to the first base station in order to provide the first base station with a priori knowledge about parameter values being acceptable for the second base station.

The usage of the described proactive message may allow for a reduction of the optimization search space and could avoid the request, grant, and denial message sequence mentioned above. Thereby, the load on the X2 interface between the first and the second base station can be reduced.

It is mentioned, that the a priori information being associated with the described proactive message could be integrated into existing load information, which is shared between at least the first cell and the second cell.

According to a further embodiment of the invention the method further comprises (a) providing the policy information to a further base station being assigned to a further cell of the telecommunication network, (b) determining a further optimized parameter value for carrying out a further handover between the first cell and the further cell based on the provided policy information by means of a further policy interpretation function being associated with the further base station, (c) transmitting a further information message between the first base station and the further base station, wherein the further information message is indicative for an intended change of the first optimized parameter value and/or for an intended change of the further optimized parameter value, and (d) adjusting the first optimized parameter value by means of the first base station and/or the further optimized parameter value by means of the further base station in a coordinated manner based on the transmitted further information message.

This may provide the advantage that the coordinated and decentralized adjustment of handover parameter values can also be accomplished with more than two base stations. There is rather no principal upper limit for the number of candidate base stations, which may serve the UE after a HO is carried out.

Also in case of more than one candidate base station the described handover parameter value adjustment method may provide further the advantage that an explicit HO optimization can be realized (a) with a significantly reduced number of unsuccessful HO requests, (b) with a higher probability for best multi target base station optimization results and (c) with a faster convergence time for the multi target base station optimization results. Possible use cases also for a multi target base station scenario include a HO optimization for quality and robustness reasons, as well as a load balancing.

According to a further embodiment of the invention the method further comprises exchanging a cause information element between the first base station and the second base station, the cause information element being indicative for a reason of an action associated with the handover and/or with a previously scheduled handover. Thereby, adjusting the first optimized parameter value by means of the first base station and/or the second optimized parameter value by means of the second base station takes into account the cause information element.

The described usage of the cause information element may provide the advantage that the reasons for a past successful handover, a past abortive and/or for a future scheduled handover can be communicated between the two base stations. In accordance with the policy information provided by the operator, the respective base station can take into account this reason for adjusting the respective optimized parameter value for the next/scheduled handover.

In this respect it is pointed out that an actual adjustment of an optimized parameter by one base station may depend on the information exchange between the two base stations. Of course if more than two base stations are involved the execution of a parameter adjustment may depend on the information exchange in between all the involved base stations.

In particular, a parameter adjustment by one base station may only be allowed if this base station before has received grant messages by all other base stations, which are involved in the coordinated parameter adjustment procedure. Further, a second parameter adjustment by a second base station, which should depend on an already accomplished successful first parameter adjustment, may be carried out only if a corresponding notification from the first base station is received by the second base station.

The described cause information element can be associated with a re-use of the known "Radio Network Layer Cause Information element". Alternatively, a dedicated information element (IE) related to SON goals and priorities can be used. Instead of having purely an informative character, the reason given in the cause information element obtains additionally the meaning of priority with respect to the operator policy.

In this respect it is mentioned that in case the reason provided with the cause information element cannot be mapped or interpreted according to the operator policy, a special IE value such as for instant a value "unspecified" should be used.

According to a further embodiment of the invention the cause information element is included in a handover request message and/or in a handover preparation failure message. This may provide the advantage that for transmitting the cause information element it is not necessary to create a separate message, which would put additional load onto the signaling load between the first and the second base station.

Descriptive speaking, in order to allow the target base station to decide on acceptance of the HO request based on the operator prioritization of goals, the cause of the HO request can be included in the HO Request Message. The cause of the HO request might be for instance a better load balancing or an improvement of the quality of the radio connection of the UE.

Also if the handover request is refused, the respective cause should be sent back to the source base station in order that the source base station can adapt its behavior to the current situation and further unsuccessful HO requests can be omitted. In such a situation, the cause could be in particular to avoid ping-pong HO, to provide a better load balancing, and/or to improve the quality of the radio connection of the UE.

According to a further aspect of the invention there is provided a first base station for adjusting at least one parameter value for controlling a handover of a user equipment between the first base station serving a first cell of a telecommunication network and a second base station serving a second cell of the telecommunication network. The provided first base station comprises (a) a receiving unit for receiving a policy information about a desired nominal operational condition of the telecommunication network from an operator of the telecommunication network, wherein the operator provides this policy information also to the second base station, (b) a determining unit with a first policy interpretation function for determining a first optimized parameter value for carrying out the handover based on the received policy information, (c) a transceiving unit for transmitting a first information message to the second base station, wherein the first information message is indicative for an intended change of the first optimized parameter value by the first base station, and for receiving a second information message from the second base station, wherein the second information message is indicative for an intended change of a second optimized parameter value for carrying out the handover, wherein the second optimized parameter value has been determined by a second policy interpretation function of the second base station based on the provided policy information, and (d) an adjustment unit for adjusting the first optimized parameter value in a coordinated manner based on the transmitted first information message and/or based on the received second information message.

This further aspect of the invention is based on the idea that policy goals being associated with a desired nominal operational condition of the telecommunication network, which policy goals are distributed from the network operator to the first base station and at least to the second base station, can be realized by means of a decentralized procedure, wherein at least the first of the two base stations adapts its optimized parameter value for carrying out the HO in a coordinated manner with respect to at least an intended change of the optimized parameter value of the second respectively the other base station. Thereby, at least with respect to the settings of handover parameters a Self Optimizing Network can be realized, which takes into account general policy information provided by the network operator.

The first base station may be in particular an enhanced NodeB (eNB) of a Long Term Evolution (LTE) network. The first eNB may be connected to the second base station, which is also an eNB, by means of a wired terrestrial X2 interface.

According to a further aspect of the invention there is provided a computer program for adjusting at least one parameter value for controlling a handover of a user equipment between a first base station serving a first cell of a telecommunication network and a second base station serving a second cell of the telecommunication network. The computer program, when being executed by a data processor, is adapted for controlling above described handover parameter value adjustment method.

As used herein, reference to a computer program is intended to be equivalent to a reference to a program element and/or a computer readable medium containing instructions for controlling a computer system to coordinate the performance of the above described handover parameter value adjustment method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or other programmable device to carry out the intended functions. The computer program may be available from a network, such as the World-WideWeb, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Figure 1 shows telecommunication network, wherein a first and a second base station adapt their handover parameter values in a coordinated manner while fulfilling general policy goals provided by the operator of the telecommunication network.

Figure 2 shows a diagram illustrating a setting of handover parameter values for a desired load balancing between a first base station and a second base station.

Figure 3 shows a transactional message flow diagram illustrating a handover preparation followed by a non successful handover operation.

Figure 4 shows a base station according to an embodiment of the invention.

Detailed Description

The illustration in the drawing is schematically. It is noted that in different figures, similar or identical elements are provided with the same reference signs or with reference signs, which are different from the corresponding reference signs only within the first digit.

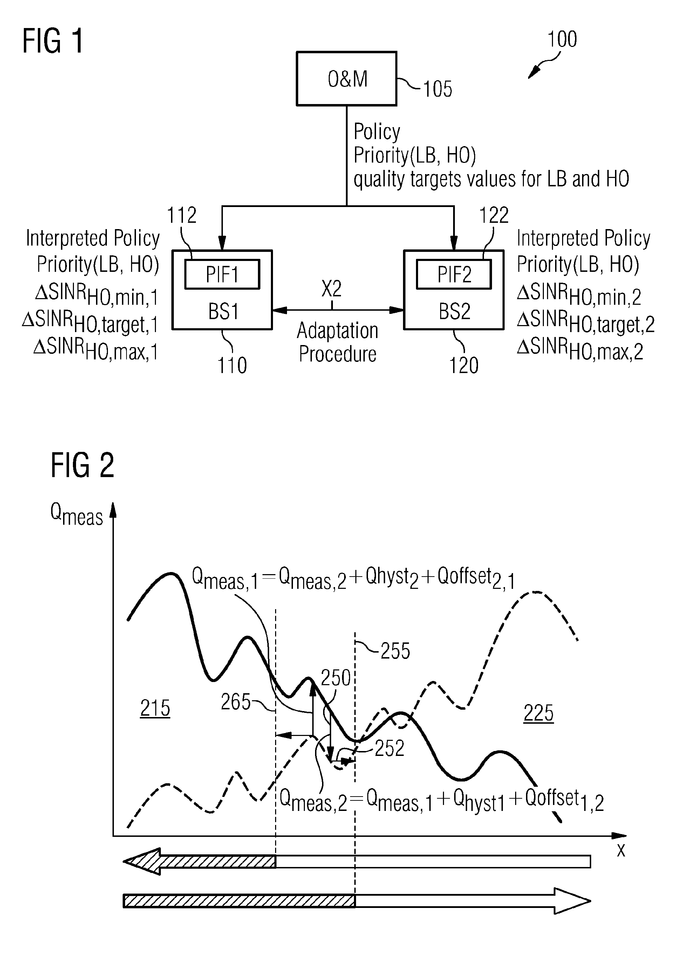

Figure 1 shows telecommunication network 100, which comprises a first base station 110 and a second base station 120. According to the embodiment described here the telecommunication network is a Long Term Evolution (LTE) network 100, the first base station is a first enhanced NodeB (eNB) 110 and the second base station is a second eNB 120. The first eNB 110 and the second eNB 120 are connected with each other by means of a terrestrial X2 interface, which is denominated with X2 in Figure 1. Further, both eNBs 110 and 120 are connected to an Operation and Maintenance Center 105. The Operation and Maintenance Center 105 is under control of the operator of the telecommunication network 100.

As can be seen from Figure 1, the operator distributes its policy about the preferred operational condition in which the telecommunication network should be operated, via the Operation and Maintenance Center 105 to both base stations 110 and 120. The first base station 110 comprises a first policy interpretation function (PIF1) 112. The second base station 120 comprises a second policy interpretation function (PIF1) 122. The PIF1 112 and the PIF2 122 handle one and the same policy information about how the telecommunication network 100. In particular the PIF1 112 and the PIF2 122 determine handover (HO) parameter values for a HO of a non-depicted user equipment (UE) between the first base station 110 and the second base station 120 should be set.

According to the embodiment described here the policy of the operator is to prioritize (a) for a load balancing (LB) between the two base stations 110 and 120 and (b) for an optimization of the radio link quality during the handover (Qual), and (c) for avoiding ping-pong HO (PP). This is also the exemplary order of prioritization.

Based on the general policy information provided by the Operation and Maintenance Center 105 the PIF1 112 and the PIF2 122 determine individually (i.e. on their own) first optimized parameter values and second optimized parameter values, respectively.

According to the embodiment described here the first PIF1 112 determines a first range for a degradation or an improvement for a Signal to Interference and Noise Ratio ($\Delta$SINR), which would be acceptable for the first base station 110 if the UE is handed over from the first base station 110 to the second base station 120. The determined first range is defined by a minimum value $\Delta SINR_{HO,min,1}$ and by a maximum value $\Delta SINR_{HO,max,1}$. Further, the PIF1 112 determines from the perspective of the first base station an optimal value $\Delta SINR_{HO,target,1}$ for a change of the SINR.

Accordingly, the second PIF2 122 determines a second range for a degradation or an improvement for a Signal to Interference and Noise Ratio ($\Delta$SINR), which would be acceptable for the second base station 120 if the UE is handed over from the second base station 120 to the first base station 110. The determined second range is defined by a minimum value $\Delta SINR_{HO,min,2}$ and by a maximum value $\Delta SINR_{HO,max,2}$. Further, the PIF2 122 determines from the perspective of the second base station an optimal value $\Delta SINR_{HO,target,2}$ for a change of the SINR.

It has to be mentioned that the values $\Delta SINR_{HO,target}$ and $\Delta SINR_{HO,max}$ can also be given directly by the operator. However, according to the embodiment described here, the PIF1 112 and the PIF2 122 convert the operator policy into those values.

As can be further seen from Figure 1, the two base stations 110 and 120 respectively the two PIFs 112 and 122 are reciprocally adapting their values by taking into account the corresponding values of the other base station. The information exchange being necessary for such an adaptation is carried out via the X2 interface connecting the two base stations 110 and 120 with each other. Thereby, at least with respect to these values a self optimization network (SON) is established.

For the reciprocally adaptation process for the values $\Delta SINR_{HO,min,1}$, $\Delta SINR_{HO,max,1}$, $\Delta SINR_{HO,target,1}$, $\Delta SINR_{HO,min,2}$, $\Delta SINR_{HO,max,2}$, and $\Delta SINR_{HO,target,2}$, also measurements and statistics related to ping-pong HO, HO failures, etc. can be taken into account. Thereby, in case of an unsuccessful HO further unsuccessful HO requests may be omitted.

It has to be mentioned that the parameter value $\Delta SINR_{HO,min} = \Delta SINR_{HO,1} + \Delta SINR_{HO,2}$ is a metric, which cannot be determined by a single base station (e.g. the base station serving cell 1) without information exchange from the neighbouring base station (e.g. the base station serving cell 2).. Nevertheless, the PIF of the serving cell could determine whether $\Delta SINR_{HO,min}$ would need to be increased or decreased, e.g. based on a policy for a maximum ping-pong HO rate $R_{PPHO}$ using local measurements of current ping-pong HO rate. A further quality target which may be provided by the operator may be the maximum rate of HO failures, i.e. HO leading to radio link failures.

As in the described example the operator goal LB has a higher priority, a link quality degradation up to $\Delta SINR_{HO,max}$ would be allowed if there is a request for load balancing. Otherwise $\Delta SINR_{HO,target}$ shall be targeted for HO quality reasons, and the ping-pong HO rate shall be below $R_{PPHO}$.

Figure 2 shows a diagram illustrating a setting of handover parameter values for a desired load balancing between a first base station spanning a first cell 215 and a second base station spanning a second cell 225. It is explained how a generic parameter $\Delta$SINR, i.e. a hysteresis (exemplified by the idle mode parameters $Qhyst_1 + Qoffset_{1,2}$) can be adapted in order to facilitate a load balancing between the two cells 215 and 225.

In the following it is considered that the first cell 215 suffers from an overloading. Therefore, the first base station adjusts the settings of $Qhyst_1$ and $Qoffset_{1,2}$ such that a handover from the first cell 215 to the second cell 225 is performed relatively soon, i.e. even if the serving first cell 215 is still better than the neighbour second cell 225. This condition is first true for x-value where the vertical black arrow 250 is shown. For a given UE speed along the x-axis, it can be assumed that a time duration during which the condition needs to be continuously fulfilled (exemplified by the time interval $Treselection_1$) can be mapped to a distance $\Delta x$, which is indicated with a horizontal arrow 250. Afterwards the HO will be executed. In Figure 2 the execution of the HO is indicated with the vertical dashed lined 255.

In case the UE moves along the negative x-direction a HO from the second cell 225 to the first cell 215 has to be accomplished. It is still assumed that the first cell comprises a larger load than the second cell. Therefore, the HO parameter values of the cell 225 are adjusted such that $\Delta SINR_2 = Qhyst_2 + Qoffset_{2,1}$ is significantly greater than 0, i.e. the HO from the second cell 225 to the first cell 215 is only done if the first cell 215 provides a notably better radio connection for the UE than the second cell 225. The corresponding HO is indicated in Figure 2 with the vertical dashed lined which is denominated with reference numeral 265. As a consequence the cell area of the second cell 225 is effectively increased and the load is shifted from the first cell 215 to the second cell 225.

On the other hand $\Delta SINR_1$ and $\Delta SINR_2$ need to be adjusted jointly in order to prevent an unwanted ping-pong handover. This means that the decision to switch to the other cell should not be taken at similar instances for both cells as otherwise small signal strength fluctuation would lead to ping-pong HO. This means that the absolute magnitude of $|\Delta SINR_1 + \Delta SINR_2| \geq \Delta SINR_{HO,min}$ shouldn't be too small. In can also be seen that large $\Delta SINR_s$ (s: serving cell) increase the time where a UE is not connected to the best possible serving base station, thus degrading it's link quality with potentially negative impact on the Quality of Service (QoS) for the UE, but definitely causing an increased resource consumption. This means that more physical resource blocks (PRBs) are required for the same data throughput. Therefore, on the one hand typically values for $\Delta SINR_s$ shouldn't be too small in order to avoid a ping-pong HO and on the other hand the values shouldn't be too large because of the condition $\Delta SINR \leq \Delta SINR_{HO,max}$.

It is mentioned that although the above example uses the idle mode parameters Qhyst and Qoffset, it can be assumed that also any proprietary algorithm in active mode would use similar adjustments for $\Delta SINR$ in order to alter the ranking of the cells 215 and 225 with respect to pure Reference Signal Received Power (RSRP) measurements - or in order to be at least able to derive equivalent proprietary parameters which have to be used.

A) Adaption of HO parameter values based on HO request and HO preparation failure messages

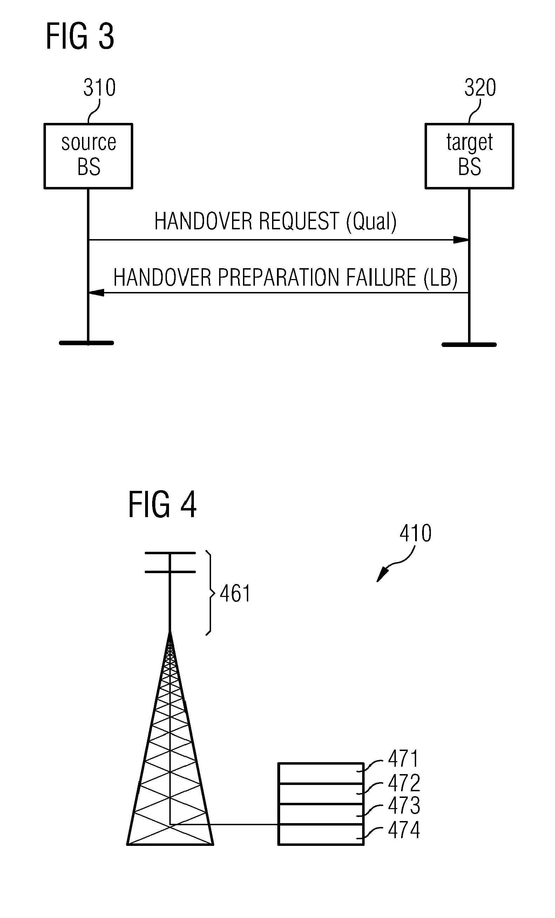

Figure 3 shows a transactional message flow diagram illustrating an unsuccessful handover preparation between a first source base station 310 and a second target base station 320. It is assumed that a HANDOVER REQUEST message, which is transmitted from the source base station 310 to the candidate target base station 320 includes an information element, which is indicative for the cause for the HO request. In the exampled depicted here, the cause for the requested HO is either (a) improving the load balancing (LB) between the two base stations 310 and 320, or (b) optimizing the radio link quality (Qual), or (c) avoiding ping-pong HO (PP).

The example depicted in Figure 3 shows the base station 320 refusing the HO request in order to improve link quality due to load balancing reasons. According to the embodiment described here the refusal by the target base station 320 is caused because a HO would have a negative impact on the load balancing. Therefore, the target base station 320 notifies the source base station 310 about the unsuccessful request by reporting this cause in a HANDOVER PREPARATION FAILURE message, which is transmitted from the target base station 320 to the source base station 310.

At this point it is mentioned that the operational condition depicted in Figure 2 could for example have been obtained by an exemplary handshake between the first and the second base station by using the messages and procedures described above. Such a handshake is described in the following three paragraphs 1), 2) and 3):

1) After requesting HOs for quality reasons the first cell 215 respectively the first base station receives from the second cell 225 respectively from the second base station very often a HANDOVER PREPARATION FAILURE message, which includes the cause "Load Balancing" (LB). The first base station can therefore conclude that the second cell 225 has load problems and will try to set its own parameter values for HO decisions such that an HO occurs later. However, these parameter values will remain within the quality target limits given by the operator policy.

2) The second base station sets its own parameters values for HO decisions such that it tries to hand over to another base station very early and indicates the cause LB in the HANDOVER REQUEST message which is sent to the first base station. After receiving multiple such messages, the first base station decides to adjusts its own parameter values for HO decisions such that it only hands over to the second base station at a late stage in order to help to diminish the load problems there.

3) It has to be mentioned that the measures described above in item 1) and item 2) can happen concurrently. Such an adaptation of the respective parameter values for HO decision is also possible if the HO traffic occurs currently only in one direction.

B) Adaption of HO parameter values based on explicit adjustment procedures using the X2 interface between source base station and target base station

In addition or alternatively to the above described procedure for adjusting parameter values for HO decisions based on causes for a failure of an HO, which causes are reported by the refusing target base station to the source base station, the HO parameter values can also be adapted based on defined procedures, which explicitly inform and adapt HO parameters.

For instance the first base station and the second base station use the following messages via the X2 interface to negotiate and manage an adaptation of the HO parameters:

a) REQUEST (goal, cell_IDs, parameters, values)

a1) goal / priority: This is a field indicating the goal (e.g. load balancing, HO optimization), or directly the corresponding priority
a2) cell_ID: This is a field giving the physical cell identification
a3) parameter: This is a field specifying the parameter to be adapted (e.g. Qhyst, Qoffset)
a4) value: differential change or absolute value of requested adaptation

b) GRANT

c) NOTIFICATION_OF_CHANGE)

d) DENIAL_OF_REQUEST(Cause)

As has already been mentioned above, the whole example could also use a generic change request instead of generic parameters.

If a cell pair specific parameter value is changed then the requesting base station has to inform about the affected cell_IDs, parameter to be changed and the differential or absolute value of the requested adaptation. If a parameter value is changed that is not cell pair specific, then the neighbour base station must be informed about all cell_IDs that are affected by that change.

In a general implementation, a base station can also request adaptation of the parameter values of a neighbour base station. In that case either some a-priori knowledge, which parameters are allowed to be adapted could be helpful. In particular, an optional message NEGOTIABLE_PARA could reduce the usage / make redundant the DENIAL_OF_ REQUEST message above:

NEGOTIABLE_PARA

1) cell_ID: cell identification

2) parameter: own parameter which is allowed to be adapted by neighbour cell (e.g. Qhyst, Qoffset, or generic parameters $\Delta$SINR, $\Delta$TA)

3) value range: possible range of value adaptation, preferably in differential terms.

Alternatively the negotiable parameters and ranges can already be exchanged between the neighbour base stations when the communication link between the base stations is established. Changes of these negotiable parameters must then exchanged by a corresponding update message.

Another message LOAD_BALANCING_INFO can be introduced in order to further reduce unsuccessful HO requests. This message sends information whether a cell is able to accept additional load:

LOAD_BALANCING_INFO

1) cell_ID: cell identification

2) load range: either pure signum functionality (+ able to take over load; - need to reduce load) or even some indication of acceptable additional / missing load, e.g. in terms of physical resource blocks (PRBs)

It is noted that the information LOAD_BALANCING_INFO could at least partly be obtained from existing load indication messages and those should be re-used or augmented for this reason. An important aspect is however, that not only the load itself is reported, but the explicit willingness to accept load. As the load balancing algorithms are proprietary, the latter cannot be deduced from the fact that load is below 100%.

For both above described messages NEGOTIABLE_PARA and LOAD_BALANCING_INFO, also a corresponding request for information can be defined. These requests may be called

- REQUEST_NEGOTIABLE_PARA(cell_ID)
- REQUEST_LOAD_BALANCING_INFO(cell_ID)

It is mentioned that state depicted in Figure 2 could for example have been obtained by an exemplary handshake procedure using the above messages and procedures. An exemplary scenario is given by in the following items (1), (2) and (3).

(1) First, BS1 checks from BS2, whether BS2 would be able to take over load. In case BS2 would accept more load, the following messages could be transmitted between BS1 and BS2:

- Message from BS1 to BS2: REQUEST_LOAD_BALANCING_INFO(BS2)
- Message from BS2 to BS1: LOAD_BALANCING_INFO(BS2,+)

(2) Second, BS1 requests to increase the parameter value for Qoffset value for the second cell respectively the BS2:

- Message from BS1 to BS2: REQUEST(LB, b, Qoffset, +3dB) BS2 checks whether this change would violate any of the constraints set by the operator policy or would likely cause an overload in its own second cell. If both is not the case BS2 adjusts its parameter value Qoffset and notifies BS1 accordingly:
- Message from BS2 to BS1: NOTIFICATION_OF_CHANGE

(3) Third, BS1 wants to reduce it's own Qoffset value in the first cell and asks for permission from BS2. BS2 checks whether it can support this setting and then grants the request. Finally BS1 notifies BS2 that the change is now in place:

- Message from BS1 to BS2: REQUEST(LB, BS1, Qoffset, -3dB)
- Message from BS2 to BS1: GRANT
- Message from BS1 to BS2: NOTIFICATION_OF_CHANGE

To be able to handle error states a failure/abort message ABORT may also be available:

- ABORT(Cause)

It is noted, that in above procedures it is assumed that the messages carry an ID that allows the sending base station of a message unambiguously assigning a received message as an answer to a previously sent message. This is necessary to have a clear separation in the case that several procedures have to be run in parallel, i.e. when it is necessary to coordinate the modification of a parameter value with more than one neighbour node. Otherwise additional data must be included in the sender's message that has to be mirrored within the corresponding respond message by the receiving neighbour node in order to allow for an unambiguous association between sent and corresponding received message.

In order to enable a first base station to calculate also $\Delta SINR_{HO,min}$ the first base station would need to know the values for the Qhyst and Qoffset parameters of the neighbour cell and the associated messages need to be defined.

Furthermore, the request to change the Qhyst (or Thyst, $Qoffset_{frequency}$) parameter of a neighbour cell n might be of limited use, as typically the cell requesting this doesn't have the relevant information about all other cells affected by such a change of Qhyst (or Thyst, $Qoffset_{frequency}$). Therefore this option may be excluded from the general messaging toolbox outlined above, i.e. a request for change of Qhyst (or Thyst, $Qoffset_{frequency}$) is only valid for cell_IDs belonging to the own base station. In this context it is mentioned that the adaptation of Qhyst (or Thyst, $Qoffset_{frequency}$) of a cell of the own base station would require the grant of all neighbouring cells, where a HO relation exists.

Figure 4 shows a base station 410 according to an embodiment of the invention.

The base station 410 comprises an antenna 461 for transmitting and receiving radio signals to and from a not depicted user equipment.

Further, the base station 410 comprises a receiving unit 471 for receiving a policy information about a desired nominal operational condition of the telecommunication network from an operator of the telecommunication network. The operator provides this policy information also to the second base station.

Further, the base station 410 comprises a determining unit 472 with a first policy interpretation function for determining a first optimized parameter value for carrying out the handover based on the received policy information.

Further, the base station 410 comprises a transceiving unit 473. The transceiving unit 473 is adapted for transmitting a first information message to the second base station, wherein the first information message is indicative for an intended change of the first optimized parameter value by the first base station 410. The transceiving unit 473 is further adapted for receiving a second information message from the second base station, wherein the second information message is indicative for an intended change of a second optimized parameter value for carrying out the handover. Thereby, the second optimized parameter value has been determined by a second policy interpretation function of the second base station based on the provided policy information.

Further, the base station 410 comprises an adjustment unit 474 for adjusting the first optimized parameter value in a coordinated manner based on the transmitted first information message and/or based on the received second information message.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

List of reference signs:

100    telecommunication network / Long Term Evolution network
105    Operation and Maintenance Center
110    first base station / first eNodeB
112    first policy interpretation function
120    second base station / second eNodeB
122    second policy interpretation function

LB        goal: load balancing
PP        goal: ping-pong HO
Qual      goal: radio link quality during handover
X2        X2 Interface

215       first cell

225       second cell

250       x-value where condition for adapted handover is fulfilled

252       distance $\Delta x$ during which HO condition is continuously fulfilled

255       Handover of UE

310       first base station / source base station
320       second base station / target base station

410       base station

461       antenna

471       measurement unit

463       forwarding unit

**Claims**

1.  Method for adjusting at least one parameter value for controlling a handover of a user equipment between a first base station (110, 310, 410) serving a first cell (215) of a telecommunication network (100) and a second base station (120, 320) serving a second cell (225) of the telecommunication network (100), the method comprising

    • providing policy information about a desired nominal operational condition of the telecommunication network (100) by an operator (105) of the telecommunication network (100) to the first base station (110, 310, 410) and to the second base station (120, 320),
    • determining a first optimized parameter value for carrying out the handover based on the provided policy information by means of a first policy interpretation function (112) being associated with the first base station (110, 310, 410),
    • determining a second optimized parameter value for carrying out the handover based on the provided policy information by means of a second policy interpretation function (122) being associated with the second base station (120, 320),
    • transmitting an information message between the first base station (110, 310, 410) and the second base station (120, 320), wherein the information message is indicative for an intended change of the first optimized parameter value and/or for an intended change of the second optimized parameter value, and
    • adjusting the first optimized parameter value by means of the first base station (110, 310, 410) and/or the second optimized parameter value by means of the second base station (120, 320) in a coordinated manner based on the transmitted information message.

2.  The method as set forth in the preceding claim, wherein the desired nominal operational condition is a predefined load balancing between the first cell (215) and the second cell (225), a predefined maximum rate for the occurrence of ping-pong handovers, and/or
    a predefined minimum quality for the handover.

3.  The method as set forth in any one of the preceding claims, wherein
    the policy information is provided by means of at least one target value,
    the first optimized parameter value is determined by the first policy interpretation function based on the at least one target value and

the second optimized parameter value is determined by the second policy interpretation function based on the at least one target value.

**4.** The method as set forth in any one of the preceding claims, wherein
the information message between the first base station (110, 310, 410) and the second base station (120, 320) is transmitted via a X2 interface.

**5.** The method as set forth in any one of the preceding claims, wherein
the information message comprises a generic request for the intended change of the first optimized parameter value and/or for the intended change of the second optimized parameter value.

**6.** The method as set forth in any one of the preceding claims, wherein
the information message comprises
a first generic parameter being associated with the first optimized parameter value and/or
a second generic parameter being associated with the second optimized parameter.

**7.** The method as set forth in any one of the preceding claims, wherein
the information message comprises
a first specific parameter being associated with the first optimized parameter value and/or
a second specific parameter being associated with the second optimized parameter.

**8.** The method as set forth in any one of the preceding claims, wherein
the information message is assigned to a negotiation process, which comprises at least one of the following messages:

- request for a parameter change,
- grant of a parameter change,
- denial of a parameter change,
- notification of a parameter change.

**9.** The method as set forth in any one of the preceding claims, further comprising

• transmitting a proactive message from the first base station (110, 310, 410) to the second base station (120, 320),
wherein the proactive message comprises information about

- whether the first base station (110, 310, 410) is able to accept an additional load and/or
- which values for the adjusted optimized parameter value would be accepted by the first base station (110, 310, 410).

**10.** The method as set forth in any one of the preceding claims, further comprising

• providing the policy information to a further base station being assigned to a further cell of the telecommunication network,
• determining a further optimized parameter value for carrying out a further handover between the first cell and the further cell based on the provided policy information by means of a further policy interpretation function being associated with the further base station,
• transmitting a further information message between the first base station and the further base station, wherein the further information message is indicative for an intended change of the first optimized parameter value and/or for an intended change of the further optimized parameter value, and
• adjusting the first optimized parameter value by means of the first base station and/or the further optimized parameter value by means of the further base station in a coordinated manner based on the transmitted further information message.

**11.** The method as set forth in any one of the preceding claims, further comprising

• exchanging a cause information element between the first base station (110, 310, 410) and the second base station (120, 320), the cause information element being indicative for a reason of an action associated with the handover and/or with a previously scheduled handover,
wherein
adjusting the first optimized parameter value by means of the first base station (110, 310, 410) and/or the second optimized parameter value by means of the second base station (120, 320) takes into account the cause information element.

12. The method as set forth in the preceding claim, wherein the cause information element is included in a handover request message and/or in a handover preparation failure message.

13. A first base station (110, 310, 410) for adjusting at least one parameter value for controlling a handover of a user equipment between the first base station (110, 310, 410) serving a first cell of a telecommunication network and a second base station (120, 320) serving a second cell of the telecommunication network, the first base station (110, 310, 410) comprising

  • a receiving unit (471) for receiving a policy information about a desired nominal operational condition of the telecommunication network (100) from an operator (105) of the telecommunication network (100), wherein the operator (105) provides this policy information also to the second base station (120, 320),
  • a determining unit (472) with a first policy interpretation function (112) for determining a first optimized parameter value for carrying out the handover based on the received policy information,
  • a transceiving unit (473)

    - for transmitting a first information message to the second base station (120, 320), wherein the first information message is indicative for an intended change of the first optimized parameter value by the first base station (110, 310, 410), and
    - for receiving a second information message from the second base station (120, 320), wherein the second information message is indicative for an intended change of a second optimized parameter value for carrying out the handover,
    wherein the second optimized parameter value has been determined by a second policy interpretation function (122) of the second base station (120, 320) based on the provided policy information, and

  • an adjustment unit (474) for adjusting the first optimized parameter value in a coordinated manner based on the transmitted first information message and/or based on the received second information message.

14. A computer program for adjusting at least one parameter value for controlling a handover of a user equipment between a first base station (110, 310, 410) serving a first cell (215) of a telecommunication network (100) and a second base station (120, 320) serving a second cell (225) of the telecommunication network (100), the computer program, when being executed by a data processor, is adapted for controlling the method as set forth in any one of the claims 1 to 12.

FIG 1

FIG 2

FIG 3

310     source BS

320     target BS

HANDOVER REQUEST (Qual)

HANDOVER PREPARATION FAILURE (LB)

FIG 4

410

461

471
472
473
474

| | Europäisches Patentamt European Patent Office Office européen des brevets | **EUROPEAN SEARCH REPORT** | Application Number EP 08 10 5417 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI: "Principles for intra frequency load balancing" 3GPP DRAFT; R3-081163 PRINCIPLES FOR INTRA FREQUENCY LOAD BALANCING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_60\docs, no. Kansas City, USA; 20080505, 30 April 2008 (2008-04-30), XP050164357 * page 1, paragraph 2.1 - page 2, paragraph 2.3 * ----- | 1-14 | INV. H04W36/08 |
| A | "Self-configuring and self-optimizing network use cases and solutions (Release 8)" 3GPP DRAFT; 36902-004_REVISON_MARKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_61\docs, no. Jeju Island; 20080818, 21 July 2008 (2008-07-21), XP050164775 * page 11, paragraph 4.6 - paragraph 4.6.2 * ----- -/-- | 1-14 | TECHNICAL FIELDS SEARCHED (IPC) H04W H04Q |

The present search report has been drawn up for all claims

| Place of search | Date of completion of the search | Examiner |
|---|---|---|
| Munich | 25 March 2009 | Hultsch, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 08 10 5417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TELECOM ITALIA ET AL: "Self-optimization use case: self-tuning of cell reselection parameters for load balancing" 3GPP DRAFT; R3-071432, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG3_Iu\TSGR3_57\docs, no. Athens, Greece; 20070820, 17 August 2007 (2007-08-17), XP050162260 * page 1, paragraph 3 - page 2 * * page 4, paragraph 6 - page 5 * ----- | 1-14 | |
| A | NOKIA SIEMENS NETWORKS ET AL: "Self-Optimization Parameters" 3GPP DRAFT; R3-071234 (OPTIMIZATION), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. Joint_Meetings\R3S5_LTE_0607_Sophia_Antipolis\docs, no. Sophia; 20070613, 7 June 2007 (2007-06-07), XP050020529 * the whole document * ----- | 1-14 | TECHNICAL FIELDS SEARCHED (IPC) |

The present search report has been drawn up for all claims

| Place of search | Date of completion of the search | Examiner |
|---|---|---|
| Munich | 25 March 2009 | Hultsch, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)